# EUROPÄISCHE PATENTSCHRIFT

(11) **EP 0 778 649 B1**
(45) Veröffentlichungstag und Bekanntmachung des Hinweises auf die Patenterteilung: **09.06.1999**
(21) Anmeldenummer: 96114104.1
(22) Anmeldetag: 04.09.1996
(51) Int. Cl.: H02K 5/128, H02K 11/04, F04D 13/06, F04D 29/58

(54) **Pumpe-Motoreinheit**
Motor pump unit
Ensemble moto-pompe

(30) Priorität: 07.12.1995 DE 19545561
(43) Veröffentlichungstag der Anmeldung: 11.06.1997
(73) Patentinhaber: Pierburg Aktiengesellschaft, 41460 Neuss (DE)
(72) Erfinder: Sinn, Walther, Dr., 47877 Anrath (DE); Langner, Frank, 52146 Würselen (DE); Weller, Wolfgang, 04703 Gersdorf (DE); Zacher, Wolfgang, Dr., 04720 Döbeln (DE); Teubel, Gerd, 04736 Waldheim (DE); Rathke, Ronald, 04720 Döbeln (DE)

(56) Entgegenhaltungen:
- DE-A- 2 057 321
- DE-A- 4 008 278
- DE-A- 4 301 675
- DE-C- 4 222 394
- US-A- 4 668 898
- US-A- 5 079 488
- US-A- 5 146 126

## Beschreibung

Pumpe-Motoreinheit, bestehend aus einer Kreiselpumpe und einem elektronisch kommutierten Gleichstrommotor nach dem Oberbegriff des Patentanspruchs 1.

Eine derartige Pumpe-Motoreinheit ist bereits aus der DE-A1 40 08 278 bekannt, bei der das Pumpenrad über eine Magnetkupplung in einer von der Motorkammer hermetisch abgeschlossenen Pumpenkammer betrieben wird. Gegenüber einem direkt vom Motor angetriebenen Pumpenrad weist diese Ausführung jedoch einen erheblich schlechteren Wirkungsgrad und hohen Bauteileaufwand auf.

Aus der DE-A-42 22 394 ist eine Pumpe-Motoreinheit bekannt, bei der zwischen der Pumpe und dem Antriebsmotor eine Kühlwand vorgesehen ist, an der wenigstens ein Leistungsteil einer Drehzahlsteuerung zur Kühlung angeordnet ist.

Aus der US-A-5 146 126 ist bereits eine Pumpe-Motoreinheit bekannt, bei der ein Spalttopf vorgesehen ist, der in seiner Stirnwand ein Lager für einen Läufer aufweist. In der US-A-4 668 898 ist ein elektronisch kommutierter Elektromotorbekannt, bei dem eine Elektronikplatine mit Elektronikbauteilen mit einem Kühlkörper verbunden ist.

Aus der US-A-5 079 488 ist eine Pumpe-Motoreinheit als Kühlmittelpumpe einer Fahrzeug-Brennkraftmaschine bekannt, deren Volumenstrom in Abhängigkeit von der Brennkraftmaschinen-Temperatur durch pulsweitenmodulierte Steuersignale gesteuert wird.

Vor dem Hintergrund der Kraftstoffverbrauchsreduzierung (Stichwort: "Drei-Liter-Auto") liegt ein Hauptaugenmerk derzeitiger Entwicklungstätigkeiten auf der Minimierung der Antriebsleistungen von Motornebenaggregaten. Die Antriebsleistung der heute üblichen mechanisch angetriebenen Kühlmittelpumpen ist drehzahlabhängig. Bei hohen Drehzahlen werden für ein Mittelklassefahrzeug Werte von deutlich über 1 kW erreicht.

Für den Energiehaushalt eines Verbrennungsmotors stellt die mechanisch angetriebene Wasserpumpe einen Dauerverbraucher dar. Im Leerlauf- und Teillastbereich (Zyklusfahrt, Stadtverkehr) wirken sich auch geringe absolute Verlustleistungen ungünstig auf den Kraftstoffverbrauch aus, da ihr Anteil hier im Vergleich zur notwendigen Motorleistung überproportional hoch ist.

Bei modernen Dieselmotoren bestehen bereits heute erhebliche Probleme mit dem Kühlmittelhaushalt. Die vor allem von Turbomotoren bei niedrigen Drehzahlen erreichten Leistungen machen Wasserpumpenauslegungen notwendig, die aufgrund drehzahlproportionaler Antriebe im Teillastbereich eine für die Fahrzeugheizung ausreichende Kühlmitteltemperatur nicht mehr aufrecht erhalten. Aufwendige Zusatzheizsysteme sorgen bei diesen Fahrzeugen für die notwendige Innenraumtemperierung. Bei den heute in Entwicklung befindlichen Motoren mit Pumpe-Düse- bzw. Common-Rail-Einspritzsystemen wird sich diese Problematik voraussichtlich noch verstärken.

Zur Erzielung eines optimalen Motorwirkungsgrades - und damit auch eines geringen Kraftstoffverbrauchs - ist eine möglichst genau angepaßte Wärmeabfuhr notwendig. Die abgeführte Wärmemenge sollte gerade so groß sein, daß keine Bauteilschädigungen an der Brennkraftmaschine durch Überhitzung auftreten können. Voraussetzung für eine genaue Temperierung ist ein regelbarer Kühlmitteldurchfluß.

Hiervon ausgehend liegt der Erfindung die Aufgabe zugrunde, eine Pumpe-Motoreinheit derart zu gestalten, daß sie für den erwähnten Kühlmitteldurchfluß einsetzbar ist. Hierfür müssen Pumpe und Motor mit gutem Wirkungsgrad zu betreiben und darüber hinaus der Volumenstrom steuerbar sein. Als Massenprodukt soll die Pumpe-Motoreinheit einen einfachen Aufbau aufweisen, so daß eine kostengünstige Fertigung erreichbar ist.

Diese Aufgabe ist bei einer gattungsgemäßen Pumpe-Motoreinheit durch die im Kennzeichen des Anspruchs 1 angegebenen Merkmale gelöst worden. Eine vorteilhafte Weiterbildung ist in dem Unteranspruch angegeben.

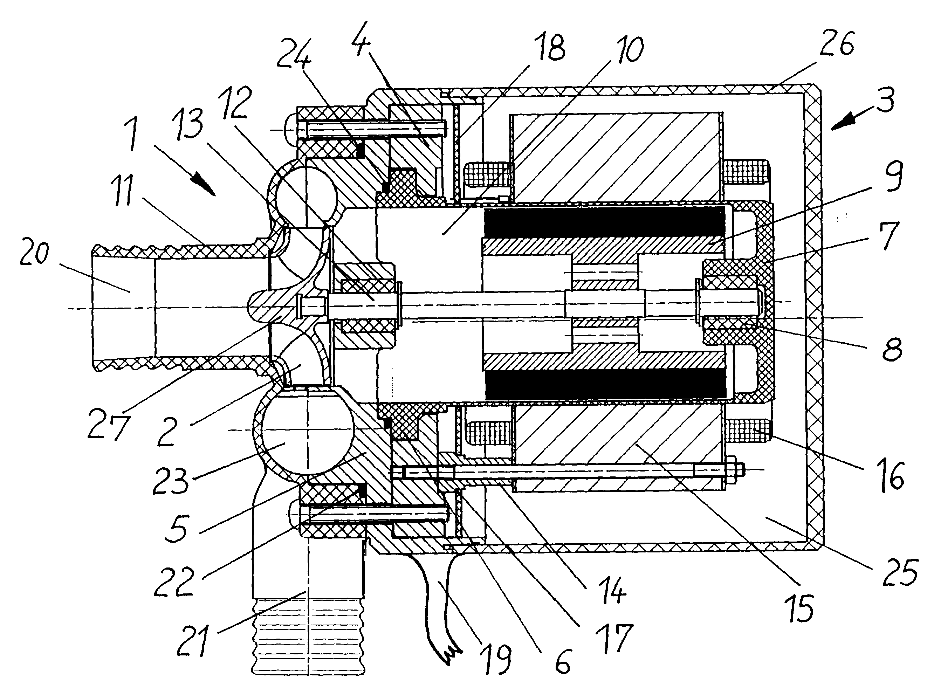

Ein Ausführungsbeispiel der Erfindung ist schematisch in der Zeichnung dargestellt und wird nachfolgend beschrieben.

Die Zeichnung zeigt eine Pumpe-Motoreinheit 1, bestehend aus einer Kreiselpumpe 2 und einem elektronisch kommutierten Gleichstrommotor 3, die für den Einsatz an einer Fahrzeug-Brennkraftmaschine geeignet ist und den Kühlwasserumlauf aufrechterhalten und volumenmäßig steuern soll. Hierfür weist die Pumpe-Motoreinheit Schlauchanschlußstutzen und elektrische Anschlußleitungen auf, auf die später noch eingegangen wird.

Erfindungsgemäß ist nun vorgesehen, daß Kreiselpumpe 2 und Gleichstrommotor 3 über einen Kühlkörper 4 miteinander verbunden sind. Durch diese Maßnahme ist ein ausreichender Wärmeaustausch zwischen der Leistungselektronik bzw. den Gleichstrommotorteilen gegenüber dem Kühlwasser erreicht worden und darüber hinaus eine vorteilhafte Serienfertigung, da der Kühlkörper 4 ein Verbindungsglied bildet.

Dadurch, daß zwischen einem Pumpengehäuse 5 und dem Kühlkörper 4 ein aus Kunststoff oder einem anderen geeigneten Werkstoff bestehender Spalttopf 6 eingespannt ist, der in seiner geschlossenen Stirnwand 7 ein Lager 8 für einen Läufer 9 aufweist, ist eine zwischen Pumpengehäuse 5 und Spalttopf 6 bestehende Läuferkammer 10 gebildet, wobei das Pumpengehäuse 5 zwischen dem Kühlkörper 4 und einem Pumpendeckel 11 eingespannt ist und ein zweites Lager 12 für den Läufer 9 aufweist.
Hierdurch kann der Läufer 9 mit seinen Lagerabschnitten 13 gelagert werden. Das im Pumpengehäuse 5 bestehende Lager 12 und das Lager 8 in der Stirnwand 7 werden durch das Kühlwasser geschmiert.

Es ist vorgesehen, daß an dem Kühlkörper 4 über Abstandshalter 14 ein Ständerpaket 15 mit einer ein- oder mehrphasigen Wicklung 16 befestigt ist und daß die Abstandshalter 14 einen Auflagebund 17 für eine Elektronikplatine 18 aufweisen, die über ein Anschlußkabel 19 nach außen mit einem elektrischen Steuergerät und nach innen mit der Wicklung 16 verbunden ist.

Dadurch, daß die Leistungselektronik auf dem Kühlkörper 4 angeordnet ist, wird die von dieser erzeugte Verlustwärme abgeführt.
Der Pumpendeckel weist die erwähnten Schlauchanschlüsse, einen Ansaugstutzen 20 und einen Druckstutzen 21 auf. Zwischen Pumpendeckel 11 und Pumpengehäuse 5 ist eine Dichtung 22 eingespannt, die die Pumpenkammer 23 nach außen abdichtet.

Vorteilhafterweise ist zwischen Pumpengehäuse 5 und Spalttopf 6 eine Dichtung 24 eingespannt, die die Läuferkammer 10 gegenüber einer äußeren Ständerkammer 25 abdichtet. Die Ständerkammer 25 ist durch eine mit dem Pumpengehäuse 5 verbundene Kappe 26 nach außen abgedichtet.

Hierdurch sind das Ständerpaket 15 mit der Wicklung 16 und die Elektronik auf Platine 18 bzw. Kühlkörper 4 vor Umwelteinflüssen geschützt. Es kann vorteilhaft sein, wenn der Kühlkörper 4 einstückig mit dem Pumpengehäuse 5 ausgebildet ist.

Die erfindungsgemäße Ausbildung der Pumpe-Motoreinheit läßt eine vorteilhafte Fertigung erwarten, durch Begrenzung der Bauteiletemperatur, geringste Luftspalte im Magnetkreis zwischen Ständerpaket 15 und Läufer 9 und direkte Übertragung der Antriebsleistung auf ein mit dem Läufer 9 verbundenes Pumpenrad 27 arbeiten Pumpe 2 und Motor 3 mit bestem Wirkungsgrad. Darüber hinaus führt die erfindungsgemäße Ausbildung zu einem geringeren Bauteileaufwand, was eine vorteilhafte Fertigung erwarten läßt. Die direkte Übertragung der Antriebsleistung auf das Pumpenrad 27, ohne verschleißbehaftete Dichtungselemente, führt zu einer hohen Lebensdauer, die nur noch durch die Lebensdauer des Lagersystems bestimmt wird.

Damit eignet sich die erfinderische Pumpe-Motoreinheit für den Einsatz als Kühlmittelpumpe einer Fahrzeug-Brennkraftmaschine, deren Volumenstrom in Abhängigkeit von der Brennkraftmaschinen-Temperatur durch pulsweitenmodulierte Steuersignale gesteuert wird.

Die Forderung nach einem variablen Kühlmitteldurchfluß ist mit der elektrisch angetriebenen Pumpe auf einfache Weise gelöst worden. Mit temperaturabhängiger Ansteuerung wird die Pumpe-Motoreinheit nur dann zugeschaltet, wenn es für den Wärmehaushalt der Brennkraftmaschine erforderlich ist.

Auslegungskriterien für die Pumpe-Motoreinheit als Kühlmittelpumpe sind der aus der bei Vollast abzuführenden Wärmemenge resultierende Flüssigkeitsvolumenstrom und der sich damit einstellende Strömungswiderstand des Kühlsystems. Untersuchungen haben ergeben, daß bei Optimierung des Kühlsystems Pumpenaufnahmeleistungen im Bereich von < 350 W ausreichen. Da die Pumpe-Motoreinheit kein Dauerverbraucher ist und zudem in den für den Stromhaushalt des Fahrzeugs kritischen Zeiten (Kaltstart, Leerlauf, Stadtverkehr) nicht oder nur mit eingeschränkter Leistung betrieben wird, können die heute üblichen Generatorbaugrößen beibehalten werden.

Die Pumpe-Motoreinheit erhält über das Anschlußkabel 19 pulsweitenmodulierte Steuersignale (aus dem Motorsteuergerät) zur stufenlosen Drehzahleinstellung (Fördermenge). Ein optionaler Drehzahlsignalausgang ermöglicht eine Funktionsüberwachung der Pumpe im Betrieb oder z. B. bei einer Diagnose.

## Patentansprüche

1. Pumpe-Motoreinheit, bestehend aus einer Kreiselpumpe und einem elektronisch kommutierten Gleichstrommotor, wobei Kreiselpumpe (2) und Gleichstrommotor (3) über einen Kühlkörper (4) miteinander verbunden sind und eine Leistungselektronik auf dem Kühlkörper (4) angeordnet ist sowie zwischen einem Pumpengehäuse (5) und dem Kühlkörper (4) ein aus Kunststoff oder einem anderen geeigneten Werkstoff bestehender Spalttopf (6) eingespannt ist, der in seiner geschlossenen Stirnwand (7) ein erstes Lager (8) für einen Läufer (9) aufweist, **dadurch gekennzeichnet,** daß das Pumpengehäuse (5) zwischen dem Kühlkörper (4) und einem Pumpendeckel (11) eingespannt ist und ein zweites Lager (12) für den Läufer (9) aufweist und eine zwischen Pumpengehäuse (5) und Spalttopf (6) eingespannte Dichtung (24) die Läuferkammer (10) gegenüber einer äußeren Ständerkammer (25) abdichtet, wobei die Ständerkammer (25) durch eine mit dem Pumpengehäuse (5) verbundene Kappe (26) nach außen abgedichtet ist.

2. Pumpe-Motoreinheit nach einem der vorstehenden Ansprüche, **dadurch gekennzeichnet,** daß der Kühlkörper (4) einstückig mit dem Pumpengehäuse (5) ausgebildet ist.

## Claims

1. Pump-motor unit consisting of a centrifugal pump and an electronically commutated DC motor, wherein centrifugal pump (2) and DC motor (3) are connected together via a heat sink (4) and a power electronics is arranged on the heat sink (4) and a can (6) consisting of plastic or another suitable material is clamped between a pump housing (5) and the heat sink (4), which can has a first bearing (8) for a rotor (9) in its closed front face (7), characterized in that the pump housing (5) is clamped between the heat sink (4) and a pump cover (11) and has a second bearing (12) for the rotor (9) and a seal (24) clamped between pump housing (5) and can (6) seals off the rotor chamber (10) with respect to an external stator chamber (25), wherein the stator chamber (25) is sealed off to the outside by means of a cap (26) connected to the pump housing (5).

2. Pump-motor unit according to one of the preceding Claims, characterized in that the heat sink (4) is designed in one piece with the pump housing (5).

## Revendications

1. Groupe motopompe constitué d'une pompe centrifuge et d'un moteur à courant continu à commutation électronique, la pompe centrifuge (2) et le moteur à courant continu (3) étant joints par l'intermédiaire d'un corps de refroidissement (4), une électronique de puissance étant montée sur le corps de refroidissement (4), et entre le corps (5) de la pompe et le corps de refroidissement (4) étant monté un pot d'entrefer (6) en plastique ou en une autre matière appropriée qui présente dans sa paroi frontale fermée (7) un premier palier (8) pour un rotor (9), caractérisé par le fait que le corps (5) de la pompe est monté entre le corps de refroidissement (4) et un couvercle de pompe (11) et présente un deuxième palier (12) pour le rotor (9), et un joint d'étanchéité (24) monté entre le corps (5) de la pompe et le pot d'entrefer (6) obture la chambre à rotor (10) vis-à-vis d'une chambre extérieure à stator (25), la chambre à stator (25) étant obturée vers l'extérieur par un chapeau (26) joint au corps (5) de la pompe.

2. Groupe motopompe selon la revendication 1, caractérisé par le fait que le corps de refroidissement (4) fait corps avec le corps (5) de la pompe.
